# EUROPEAN PATENT APPLICATION

(11) **EP 4 756 909 A1**
(43) Date of publication of application: **10.06.2026**
(21) Application number: 24876552.1
(22) Date of filing: 09.10.2024
(51) Int. Cl.: H01M 4/36, H01M 4/58, H01M 10/054

(54) **SODIUM ION BATTERY POSITIVE ELECTRODE MATERIAL, PREPARATION METHOD THEREFOR, AND USE THEREOF**

(30) Priority: 10.10.2023 CN 202311304191
(71) Applicant: REPT BATTERO Energy Co., Ltd., Wenzhou, Zhejiang 325000 (CN); Shanghai Ruipu Energy Co., Ltd., Shanghai 201206 (CN)
(72) Inventor: CAO, Hui, Wenzhou, Zhejiang 325000 (CN); CHEN, Dandan, Shanghai 201206 (CN); HOU, Min, Shanghai 201206 (CN); ZHANG, Yu, Shanghai 201206 (CN); LIU, Chan, Shanghai 201206 (CN)
(74) Representative: Vitina, Maruta
(86) International application number: PCT/CN2024/123727
(87) International publication number: WO 2025/077739

(57) **Abstract**

A sodium ion battery cathode material and its preparation method and application, belonging to the field of sodium ion battery technology. The sodium ion battery cathode material includes a polyanionic iron-manganese core material and a fast ion conductor layer coated on the outer surface of said polyanionic iron-manganese core material; the polyanionic iron-manganese core material contains iron and manganese, and the iron and manganese are non-uniformly distributed within the polyanionic iron-manganese core material; at the center of the polyanionic iron-manganese core material, the manganese content is higher than the iron content; on the surface layer of the polyanionic iron-manganese core material, the iron content is higher than the manganese content. The non-uniform distribution of iron and manganese in the core material of the cathode material can effectively mitigate the risk of structural collapse caused by metal ion migration during cycling; the fast ion conductor coating reduces side reactions caused by electrolyte erosion, effectively addressing the issues of low capacity, rapid degradation, and low energy density associated with traditional single-phase materials.

## Description

### TECHNICAL FIELD

The present invention belongs to the field of sodium ion battery technology, and specifically involves a cathode material for sodium ion battery and its preparation method and application.

### BACKGROUND TECHNOLOGY

Energy is a vital material foundation for the survival and development of human society. As traditional fossil resources dwindle, countries around the world are vigorously developing new energy systems. Lithium ion batteries, as the most advanced secondary battery in terms of overall performance, dominate the markets for portable electronic devices and electric vehicles, and are gradually expanding into the energy storage sector. However, lithium reserves in the earths crust are limited, with most lithium concentrated in a few countries in South America. This situation has led to a rapid increase in global lithium prices, which in turn raises the manufacturing costs of lithium ion batteries. Currently, the shortage of lithium resources and the rising cost of lithium battery production make it difficult for lithium ion batteries to meet the demands of future electric vehicle and energy storage industries. To overcome the constraints of scarce lithium resources, it is necessary to develop a new generation of energy storage batteries with greater cost advantages.

Sodium and lithium have very similar physical and chemical properties. Sodium is abundant, widely distributed, and inexpensive. Sodium ion batteries, built on the deintercalation mechanism, offer greater resource and cost advantages compared to lithium ion batteries. This has led to significant advancements in sodium ion battery technology in recent years, making it a research hotspot and accelerating industrialization, enabling rapid applications in energy storage and small-scale power systems. Cathode materials are a crucial component of sodium ion batteries. Currently, there are three main technical routes for cathode materials: layered oxides, Prussian blue compounds, and polyanions. Among these, layered oxides have high energy density and compaction density but poor air stability, making them highly susceptible to moisture absorption. Additionally, sodium is more reactive than lithium, leading to more severe residual alkali on the surface of sodium-layered oxide compared to lithium. Polyanion compounds, due to their stable structure, good thermal stability, long cycle life, and low cost, are one of the ideal choices for energy storage sodium ion batteries.

Iron-based polyanionic compounds are among the most extensively studied cathode materials for sodium ion batteries. The pyrophosphate and phosphate groups in the material form a stable framework structure, allowing sodium ions to shuttle reversibly within it. During the process of sodium ion intercalation and deintercalation, lattice distortion is minimal, resulting in excellent cycling stability and thermal stability. Additionally, this material offers advantages such as safety, non-toxicity, and cost-effectiveness. However, the theoretical specific capacity of this material is not high, and its electronic conductivity is poor, with a voltage plateau around 3.2V and low energy density. In contrast, manganese-based materials with similar structures exhibit poor electrochemical performance, experiencing rapid capacity decay during cycling, but with a voltage plateau at 3.8V. Therefore, research on iron-manganese hybrid materials is becoming increasingly prevalent. Under the condition of maintaining high gravimetric capacity and excellent cycling performance, the voltage plateau can be significantly increased, leading to a substantial improvement in energy density, making them more suitable for commercial applications.

However, in current research on preparing high-performance polyanionic iron-manganese based materials, the achievable discharge specific capacity is relatively low, far from the ideal level, and cycle stability is poor, affecting their application. This is due to the tendency of manganese-based materials to undergo john-teller distortion during cycling, and the dissolution of manganese in the electrolyte, leading to loss of manganese from the active material, which results in structural degradation and capacity fade of the electrode. For example, patent CN114373923A provides a polycrystalline morphology of sodium iron phosphate-manganese-carbon composite cathode material and its preparation method. However, using carbon to coat sodium iron phosphate-manganese does not prevent the dissolution of manganese, resulting in poor structural stability and suboptimal cycling performance. Patent CN110838576A discloses a doped coated sodium ion battery cathode material and its preparation method and application. This material involves doping and coating after calcining to obtain the core material, leading to poor bonding between the coating layer and the core, insufficient tightness of the coating, and weakened interface protection capability.

Therefore, it is of great significance to prepare an iron-manganese based polyanion sodium cathode material with high specific capacity, high voltage platform and high cycling stability.

### SUMMARY OF THE PRESENT INVENTION

The purpose of the present invention is to overcome the problems existing in the above-mentioned prior art and provide a cathode material for sodium ion battery and its preparation method and application.

The present invention is realized by the following technical solution:
A cathode material for a sodium ion battery, the cathode material comprising a polyanion iron manganese core material and a fast ion conductor layer covering the outer surface of the polyanion iron manganese core material;
The polyanionic iron-manganese core material comprises iron and manganese, with the iron and manganese being non-uniformly distributed within the polyanionic iron-manganese core material; at the center of the polyanionic iron-manganese core material, the manganese content is higher than the iron content; at the surface layer of the polyanionic iron-manganese core material, the iron content is higher than the manganese content.

In some embodiments, the polyanionic iron-manganese based core material includes at least one of NaFeₓMn₁₋ₓPO₄, Na₂FeₓMn₁₋ₓP₂O₇, Na₃Fe_{y}Mn_{2-y}(PO₄)P₂O₇ and Na₄₋ₐFe_{2+ (a/2)-z}Mn_{z}(P₂O₇)₂, where 0.2≤ x≤ 0.8, 0.2≤y≤ 1.8, 2/3≤a≤7/8, and 0.2≤z≤ 1.8.

In some embodiments, the manganese content at the center of the polyanionic iron-manganese based core material is greater than the manganese content at the surface of the polyanionic iron-manganese based core material.

In some embodiments, the iron content of the surface layer of the polyanionic iron-manganese based core material is greater than the iron content of the center of the polyanionic iron-manganese based core material.

In some embodiments, the polyanionic iron manganese based core material is NaFeₓMn₁₋ₓPO₄, where 0.4≤x≤0.6, for example, x is 0.5.

In some embodiments, the polyanionic iron manganese based core material is Na₂FeₓMn₁₋ₓP₂O₇, where 0.4≤x≤0.6, for example, x is 0.5.

In some embodiments, the polyanionic iron manganese based core material is Na₃Fe_{y}Mn_{2-y}(PO₄) P₂O₇, where 0.4≤y≤ 1.6. For example, y is 0.6, 0.8, 1, 1.2, 1.4.

In some embodiments, the polyanionic iron manganese based core material is Na₄₋ₐFe_{2+(a/2) -z}Mn_{z}(P₂O₇)₂, where 0.67≤a≤0.8 and 0.5≤z≤1.5; Preferably, 0.6 8≤a≤0.8 or 0.6 8≤ a≤0.7; Preferably, 0.8≤z≤ 1.3 or 1 ≤ z ≤ 1.2.

In some embodiments, the polyanionic iron manganese based core material is selected from one or more of Na₃FeMn(PO₄)P₂O₇, Na₃Fe_{0.4}Mn_{1.6}(PO₄)P₂O₇, Na₃Fe_{1.6}Mn_{0.4}(PO₄)P₂O₇, Na_{3.32}Fe_{1.17}Mn_{1.17}( P₂O₇)₂ and NaFe_{0.5}Mn_{0.5}PO₄.

In the present invention, the manganese content of the polyanion iron-manganese based core material refers to the ratio of the amount of manganese element to the total amount of manganese element and iron element, and the iron content of the polyanion iron-manganese based core material refers to the ratio of the amount of iron element to the total amount of manganese element and iron element.

In some embodiments, the polyanionic iron-manganese based core material includes at least one of NaFeₓMn₁₋ₓPO₄, Na₂FeₓMn₁₋ₓP₂O₇, Na₃FeₓMn₂₋ₓ(PO₄)P₂O₇, Na_{4-y}Fe_{2+y}Mn_{2+y}(P₂O₇)₂, where 0.2≤x≤0.8 and 2/3≤y≤7/8.

The present invention involves a sodium ion battery cathode material with a polyanionic iron-manganese based core material as the inner core material, and an outer layer of fast ion conductor coating. The fast ion conductor coating can achieve doping of metal ions on the surface of the inner core material, making the surface coating layer more tightly connected to the inner core material particles, reducing the risk of detachment; it also reduces electrolyte erosion of the inner core material, stabilizing the crystal structure of the inner core material while preventing parasitic reactions at the interface. Additionally, the fast ion conductor layer has excellent sodium ion conductivity, avoiding capacity loss. Compared to metal oxides, which have poorer conductivity and the polyanionic material itself has poor conductivity, their combination may inevitably lead to capacity decay; compared to conductive polymers with better conductivity, which typically have thicker coating layers that increase the migration distance of sodium ions and reduce kinetic performance. Moreover, the central manganese content in the polyanionic iron-manganese based inner core material is higher than the iron content, while the surface iron content is higher than the manganese content, meaning that the inner core part of the polyanionic iron-manganese based material is rich in manganese, and the outer shell is rich in iron. This uneven distribution of components effectively alleviates issues such as manganese dissolution and iron ion migration during cycling, ensuring structural stability, relieving the stress change of materials during charge and discharge, avoiding the crushing of particles leading to deterioration of performance, but also improving the poor electrochemical properties of manganese-based materials.

The fast ion conductor is NaₐM^{b+}_{c}O_{(a+bc)/2}, where M includes at least one of Zr, Al, V, Si, and a, b, c satisfy (a + bc)/2 being a positive integer. In some embodiments, a is selected from 1 to 5, for example 2, 3, 4. In some embodiments, b is selected from 2 to 5, for example 3, 4. In some embodiments, c is selected from 1 to 3, for example 2. In some embodiments, the fast ion conductor is selected one or more of Na₂Si₂O₅, Na₃VO₄ and NaAlO₂.

As an optimal embodiment of the cathode material for sodium ion batteries described in the present invention, the mass of the fast ion conductor layer is 0.5% to 6% of the mass of the polyanionic iron-manganese core material, for example, 0.5% to 5%; or, the thickness of the fast ion conductor layer is 1nm to 10nm. In some embodiments, the mass of the fast ion conductor layer is 0.5% to 6% of the mass of the polyanionic iron-manganese core material, for example, 1%, 2%, 3%, 4%, 5%.

As an optimal embodiment of the cathode material for sodium ion batteries described in the present invention, a carbon layer is also present between the polyanionic iron-manganese core material and the fast ion conductor layer; the mass of the carbon layer is 0.1% to 4% of the mass of the polyanionic iron-manganese core material, for example, 0.2%, 0.5%, 1%, 2%, 3%.

Another object of the present invention is to provide a method for preparing the cathode material of the sodium ion battery, which includes the following steps:
(1) Dissolve the metal chelating agent in solvent to form solution A, dissolve the iron source in solvent to form solution B, and dissolve the manganese source in solvent to form solution C; add solutions B and C dropwise into solution A, with solution C added first and solution B added later; then add the phosphorus source, sodium source, and carbon source; evaporate the resulting mixed solution to a gel state, dry it, grind it, calcine it, and grind again to obtain the precursor of polyanionic iron-manganese core materials;
(2) Disperse the fast ion conductor in solvent to obtain solution D; disperse the precursor of polyanionic iron-manganese based core material obtained from step (1) in solvent to obtain solution E; add solution D to solution E, then evaporate and dry the resulting mixed solution to obtain the precursor of polyanionic iron-manganese based core material coated with a fast ion conductor;
(3) The precursor of the polyanionic iron-manganese based core material coated with fast ion conductor obtained in step (2) is ground and calcined to obtain the cathode material for sodium ion battery.

The present invention utilizes the differences in chelation between iron and manganese metal ions using a metal chelating agent. During the addition of the solution, more manganese sources are initially added to form a preliminary chelation, ensuring that the central manganese content in the polyanion iron-manganese core material is higher than the iron content. Subsequently, iron, which has stronger chelation ability, enters later and is more distributed on the surface of the manganese, making the surface iron content in the polyanion iron-manganese core material higher than the manganese content. This results in a polyanion iron-manganese core material with uneven distribution of iron and manganese. The uneven distribution, with a rich center of manganese and a rich surface of iron, effectively mitigates the risk of structural collapse caused by metal ion migration during cycling, ensuring structural stability and enhancing cycling performance. Adding a carbon source during the preparation of the polyanion iron-manganese core material not only ensures the formation of divalent iron ions but also enhances the conductivity of the material. This is because, during high-temperature synthesis of the material body, the carbon source forms an in-situ carbon layer on the surface of the material. Coating the outer surface of the polyanion iron-manganese core material with a fast ion conductor layer can reduce side reactions between the core material and the electrolyte, effectively protecting the core material while ensuring that the fast ion transport channel remains unobstructed, thereby effectively raising the voltage platform of the cathode material and improving the performance of the cathode energy density, discharge specific capacity and cycling performance of the material.

As an optimal embodiment of the method for preparing the cathode material of sodium ion batteries according to the present invention, in step (1), the molar ratio of iron in the iron source to manganese in the manganese source is Fe:Mn= (1-4): (1-4). For example, Fe:Mn can be 1:1, 2:1, 1:2, 1:3, 3:1, 1:4, 4:1, etc. In some embodiments, the molar ratio of iron in the iron source to manganese in the manganese source is Fe:Mn=1:(0.25-4), for example 1:0.5, 1:1, 1:2, 1:3.

In step (1) of the present invention, the molar ratio of iron in the iron source to sodium in the sodium source can be Fe:Na=1:(1-20), preferably 1:(2-15), for example 1:4, 1:6, 1:10, 1:12.

In step (1) of the present invention, the molar ratio of iron in the iron source to phosphorus in the phosphorus source can be Fe:P=1:(1-20), preferably 1:(2-15), such as 1:4, 1:6, 1:10, 1:12.

As an optimal embodiment of the method for preparing the cathode material of the sodium ion battery according to the present invention, in step (1), the metal chelating agent is a high molecular compound composed of C, H, and O; and it can chelate with iron and manganese; the mass of the metal chelating agent is 1% to 5% of the combined mass of the iron source and manganese source, for example, 2%, 3%, or 4%.

In step (1), the amount of carbon source added is determined according to the mass ratio of carbon element in the polyanion iron-manganese core material.

As an optimal embodiment of the method for preparing the cathode material of sodium ion batteries described in the present invention, in step (1), the droplet rate ratio of Solution B to Solution C is 1:(2-5), for example, 1:3 or 1:4. When Solution B and Solution C are of equal volume, the preparation of the core material with uneven iron-manganese distribution in the present invention is achieved by controlling the droplet rate of Solution B and Solution C.

Preferably, in step (1), the droplet rate ratio of solution B to solution C is 1:(2-3). In some embodiments, the droplet rate of solution B is 0.05mL/s~0.2mL/s, preferably 0.1mL/s~0.2mL/s, for example 0.12mL/s, 0.14mL/s, 0.16mL/s, 0.18mL/s. In some embodiments, the droplet rate of solution C is 0.1mL/s~1mL/s, preferably 0.2mL/s~1mL/s, such as 0.4mL/s, 0.6mL/s, 0.8mL/s.

In some embodiments, the metal chelating agent is dissolved in solution A at a heated temperature; preferably, the heating temperature is 80°C~100°C.

In some embodiments, after solution B and Solution C are added to solution A, the resulting mixture is continuously stirred in an aqueous bath at 80°C~100°C, and phosphorus source, sodium source and carbon source are added.

In some embodiments, in step (1), the drying temperature is 100°C~150°C, preferably 120°C ~150°C. In some embodiments, in step (1), the drying time is 10h~18h, preferably 12h~15h.

Preferably, in step (1), the calcination temperature is 300°C to 400°C, and the time is 5h to 8h. In some embodiments, in step (1), the calcination temperature is 350°C to 400°C. In some embodiments, the calcination time is 6h to 8h.

In step (2), the amount of fast ion conductor added is determined according to the mass ratio of the fast ion conductor layer in the polyanion iron manganese core material.

Preferably, in step (2), the evaporation is carried out at 60°C~90°C, preferably at 70°C ~80°C.

Preferably, in step (2), the drying temperature is 100°C~150°C, preferably 100°C~120°C. Preferably, in step (2), the drying time is 3h~10 h, preferably 5h~10 h.

Preferably, in step (3), the calcination temperature is 500°C~650°C, for example 500°C ~600°C, and the time is 9h~12h. In some embodiments, in step (3), the calcination temperature is 550°C~650°C.

Preferably, in step (3), the calcination atmosphere is a mixture of hydrogen and argon, preferably, the calcination atmosphere is composed of 5%~10% hydrogen and 90%~95% argon by volume fraction.

In some embodiments, in step (3), the heating rate of the calcination temperature is 1°C min⁻¹~3°C min⁻¹Preferably, in step (3), the heating rate of calcination temperature is 2°C min⁻¹.

Preferably, the sodium source comprises at least one of sodium carbonate, sodium bicarbonate, sodium acetate and sodium nitrate. In some embodiments, the sodium source is sodium nitrate.

Preferably, the iron source comprises at least one of ferrous oxalate dihydrate, ferrous phosphate and ferric nitrate nonahydrate. In some embodiments, the iron source is ferric nitrate nonahydrate.

Preferably, the manganese source comprises at least one of manganese chloride, manganese acetate, and manganese nitrate. In some embodiments, the manganese source is manganese acetate.

Preferably, the phosphorus source includes at least one of ammonium dihydrogen phosphate, diammonium hydrogen phosphate and ammonium phosphate. In some embodiments, the phosphorus source is ammonium dihydrogen phosphate.

Preferably, the carbon source includes at least one of glucose, sucrose and citric acid. In some embodiments, the carbon source is sucrose.

Preferably, the metal chelating agent includes at least one of polyvinyl alcohol and polymethacrylic acid.

Preferably, the fast ion conductor is selected from one or more of Na₂Si₂O₅, Na₃VO₄ and NaAlO₂.

Another object of the present invention is to provide a cathode slurry for a sodium ion battery, which includes the cathode material of the sodium ion battery as described in the present invention. The cathode slurry also optionally includes a solvent, a conductive agent and a binder.

Another objective of the present invention is to provide a sodium ion battery cathode, which includes the sodium ion battery cathode material as described in the present invention. The sodium ion battery cathode comprises a cathode current collector and a cathode active material layer set on the cathode current collector. The cathode active material layer can be obtained by coating the cathode slurry onto the cathode current collector, followed by drying and pressing.

Another objective of the present invention is to provide a sodium ion battery, which includes a cathode. The cathode comprises the cathode material of the sodium ion battery as described in the present invention or the cathode material prepared by the method described herein. The sodium ion battery also includes an anode, separator, electrolyte, and other components commonly used in the field.

The cathode material of the sodium ion battery in the present invention is based on a polyanion iron-manganese core material with an open three-dimensional framework structure. It features better ion transport channels and lower ion migration barriers, which facilitates the rapid migration of sodium ions. At the same time, it combines the stability of iron-based materials with the high voltage platform of manganese-based materials. When used in sodium ion battery cathodes, it can achieve stable cycling and has a high capacity and high voltage platform. Sodium-ion batteries using the cathode material of the present invention exhibit high specific capacity and a high voltage platform, with stable performance, strong environmental adaptability, and environmental friendliness.

The present invention has the following beneficial effects:
(1) The cathode material of the sodium ion battery in the present invention includes a polyanionic iron-manganese core material and a fast ion conductor coating layer. In the polyanionic iron-manganese core material, iron and manganese are distributed non-uniformly, with higher manganese content at the center and higher iron content on the surface. This uneven distribution effectively alleviates issues such as manganese dissolution and iron ion migration during cycling, ensuring structural stability and mitigating stress changes during charging and discharging, preventing particle pulverization that leads to performance degradation. It also improves the poor electrochemical performance of manganese-based materials. The presence of the fast ion conductor coating layer further protects iron and manganese, preventing manganese dissolution and inhibiting iron migration, reducing side reactions caused by electrolyte erosion. Moreover, the coating is applied during the preparation of the polyanionic iron-manganese precursor, allowing the metal of the fast ion conductor coating layer to intercalate into the lattice of the polyanionic iron-manganese core material during secondary sintering, achieving doping of metal ions on the surface of the core material. This results in a more stable interlayer interaction between the coating and the core, enhancing the integrity and tightness of the coating, providing better interface protection, and ensuring that the fast ion transport channel remains unobstructed, maintaining good sodium ion conductivity, which will not cause a loss in capacity. The sodium ion battery cathode material of the present invention effectively protects manganese-based materials and enhances the voltage platform of iron-based materials, addressing the issues of low capacity, rapid degradation, and low energy density associated with traditional single-phase materials. It provides an iron-manganese based material that can stably cycle and has high capacity and a high voltage platform as the cathode material for sodium ion batteries.
(2) The present invention employs a dropwise solvent thermal method to prepare polyanionic iron-manganese core materials for sodium ion battery cathode materials. During the preparation process, metal chelating agents are added, utilizing their varying chelation strengths with different metal ions to achieve an uneven distribution of metals within the polyanionic iron-manganese base material. The metal chelating agent can chelate both iron and manganese, but it has a stronger chelation effect on iron. In the process of adding iron and manganese solutions, a higher amount of manganese source is initially added to chelate first, resulting in a higher manganese content near the center of the polyanionic iron-manganese core material. Subsequently, the more strongly chelated iron enters and distributes more on the surface of the manganese layer, leading to a higher iron content than manganese content in the surface of the polyanionic iron-manganese core material, thus obtaining a polyanionic iron-manganese core material with unevenly distributed iron and manganese.
(3) In the preparation of the polyanionic iron-manganese core for the cathode material of sodium ion batteries in the present invention, a carbon source is added. On one hand, during calcination, it can undergo carbon thermal reduction reactions to reduce metal ions and form the required divalent metal compounds; on the other hand, it enhances the conductivity of the cathode material of sodium ion batteries, addressing the issue of low conductivity in existing sodium ion battery cathode materials.
(4) The preparation method of the present invention is simple, the materials are easy to obtain, the cost is low, the conditions are easy to achieve, the cathode material obtained has excellent electrochemical performance, which is conducive to large-scale industrial application, reducing the production cost of enterprises, and has great development prospects in the field of large-scale energy storage.

### ILLUSTRATIVE DRAWINGS

Figure 1 shows the charge-discharge curve of the cathode material prepared in Example 1.
Figure 2 shows the charge-discharge curves of the cathode material prepared in Comparative Example 1.
Figure 3 shows the charge-discharge curves of the cathode material prepared in Comparative Example 2.
Figure 4 shows the SEM image of the cathode material prepared in Example 1.
Figure 5 shows the EDS element distribution of the cathode material prepared in Example 1.

### DETAILED DESCRIPTIONS

To better illustrate the objectives, technical solutions, and advantages of the present invention, the following will provide further explanation with reference to specific embodiments. Those skilled in the art should understand that the specific embodiments described herein are intended to explain the present invention and not to limit it.

The test methods used in the embodiments are conventional methods unless otherwise specified; the materials and reagents used can be obtained from commercial sources unless otherwise specified.

The elemental distribution of the polyanion iron-manganese core material was analyzed by EDS.

In the present invention, the mass ratio of fast ion conductor layer, carbon layer and polyanion iron manganese based core material is calculated according to the input ratio in the preparation process.

### Example 1

A method for preparing a cathode material for a sodium ion battery is as follows:
(1) Dissolve polyvinyl alcohol (number-average molecular weight 25,000 to 35,000) in 10mL of deionized water, heat to a constant temperature of 80°C, and stir until completely dissolved to obtain Solution A; dissolve ferric nitrate nonahydrate in 10mL of deionized water, stir until dissolved to obtain Solution B (concentration 0.1 mol/mL); dissolve manganese acetate in 10mL of deionized water, stir until dissolved to obtain Solution C. Pump Solution B and Solution C into Solution A using a peristaltic pump, controlling the droplet rate of Solution B at 0.1mL/s and Solution C at 0.2mL/s. After all solutions have been added, continuously stir the resulting mixture in an 80°C water bath. Then sequentially add ammonium dihydrogen phosphate, sodium nitrate, and sucrose. Evaporate the solution to a gel-like state, stop heating, transfer it to a 120°C constant-temperature oven for drying for 12h. Remove and grind the powder, then calcine the obtained powder at 350°C for 6h. After cooling, further grind to obtain the mixed iron manganese sodium pyrophosphate precursor (Na₃FeMn(PO₄) P₂O₇).
   Among them, the molar ratio of ferric nitrate nonahydrate, manganese acetate, sodium nitrate and ammonium dihydrogen phosphate is 1: 1: 3: 3; the mass of polyvinyl alcohol is 3% of the sum of the mass of manganese source and iron source; the amount of sucrose added is calculated according to the mass ratio of carbon and core material in the sodium ion cathode material obtained finally.
(2) Add NaAlO₂ to disperse in deionized water and stir continuously at 25°C for 30 min to obtain solution D (concentration of 1 mol/mL). Disperse the precursor of mixed ferric phosphate manganese sodium prepared in step (1) in anhydrous ethanol to obtain solution E (concentration of 0.1 mol/mL). Add solution D to solution E using a peristaltic pump. After dripping is complete, stir and heat the new mixture in a water bath at 70°C, rapidly evaporating the solution. Once the liquid is completely dried, dry it in a constant temperature oven at 120°C for 5h to obtain NaAlO₂ coated mixed iron manganese sodium pyrophosphate precursor. The amount of NaAlO₂ added is calculated based on the mass ratio of NaAlO₂ to the core material in the final sodium ion cathode material
(3) Grind the NaAlO₂ coated mixed iron manganese sodium pyrophosphate precursor obtained in step (2), and further calcine at 550°C for 12h in a calcination atmosphere of 5% hydrogen and 95% argon (volume fraction) at a heating rate of 2 °C min-1 to obtain Na₃FeMn(PO₄)P₂O₇ sodium ion battery cathode material coated with NaAlO₂; In the obtained sodium ion cathode material, the mass of the NaAlO₂ coating layer is 1% of the mass of the Na₃FeMn(PO₄)P₂O₇ core material, the thickness of the NaAlO₂ coating layer is 2-3nm, and the mass of carbon is 2% of the mass of the Na₃FeMn(PO₄)P₂O₇ core material. At the center of the core material, the manganese content is higher than the iron content; On the surface of the core material, the iron content is higher than the manganese content. The manganese content in the center of the core material is greater than that in the surface layer, and the iron content in the surface layer of the core material is greater than that in the center.

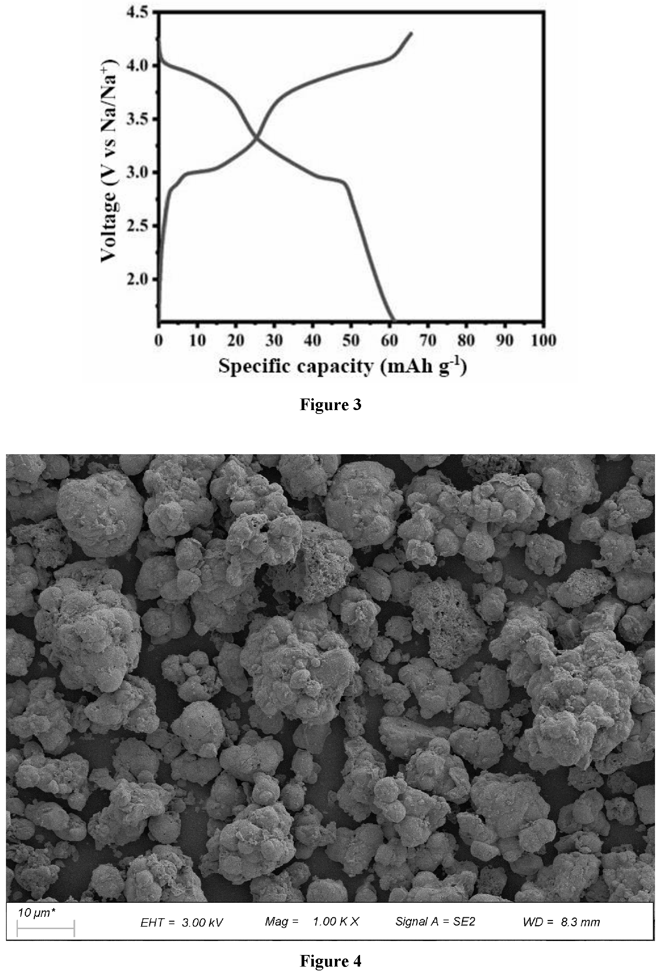

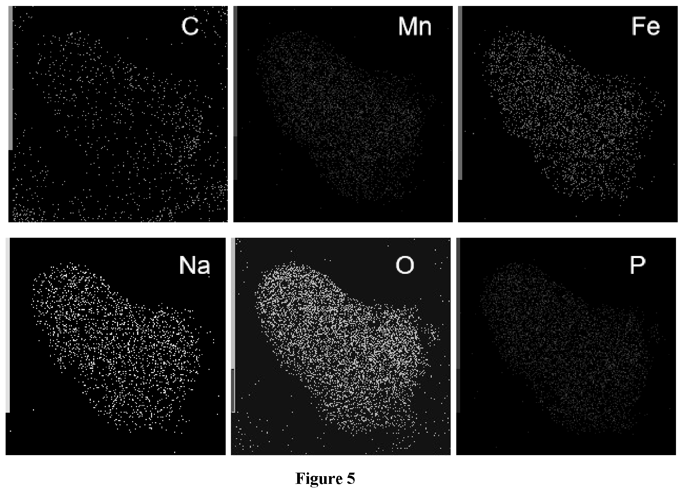

The SEM and EDS element distribution of the cathode material prepared in Example 1 are shown in Figure 4 and Figure 5.

### Example 2

The only difference between this embodiment and Example 1 is that the amount of NaAlO₂ added in step (2) is changed so that the mass of the NaAlO₂ coating layer in the final sodium ion cathode material is 0.5% of the mass of the Na₃FeMn(PO₄)P₂O₇ core material, and the thickness of the NaAlO₂ coating layer is 1-2nm. The rest is the same as Example 1, resulting in the Na₃FeMn(PO₄)P₂O₇ sodium ion battery cathode material coated with NaAlO₂ in this embodiment. At the center of the core material, the manganese content is higher than the iron content; On the surface of the core material, the iron content is higher than the manganese content. The manganese content in the center of the core material is greater than that in the surface layer, and the iron content in the surface layer of the core material is greater than that in the center.

### Example 3

The difference between this embodiment and Example 1 is only that the amount of NaAlO₂ added in step (2) is changed so that the mass of the NaAlO₂ coating layer in the final sodium ion cathode material is 2% of the mass of the Na₃FeMn(PO₄)P₂O₇ core material, and the thickness of the NaAlO₂ coating layer is 4-5nm. The rest is the same as Example 1, resulting in the Na₃FeMn(PO₄)P₂O₇ sodium ion battery cathode material coated with NaAlO₂ in this embodiment. At the center of the core material, the manganese content is higher than the iron content; On the surface of the core material, the iron content is higher than the manganese content. The manganese content in the center of the core material is greater than that in the surface layer, and the iron content in the surface layer of the core material is greater than that in the center.

### Example 4

The only difference between this embodiment and Example 1 is that the amount of NaAlO₂ added in step (2) is changed so that the mass of the NaAlO₂ coating layer in the final sodium ion cathode material is 5% of the mass of the Na₃FeMn(PO₄)P₂O₇ core material, and the thickness of the NaAlO₂ coating layer is 7-8nm. The rest is the same as Example 1, resulting in the Na₃FeMn(PO₄)P₂O₇ sodium ion battery cathode material coated with NaAlO₂ in this embodiment. At the center of the core material, the manganese content is higher than the iron content; On the surface of the core material, the iron content is higher than the manganese content. The manganese content in the center of the core material is greater than that in the surface layer, and the iron content in the surface layer of the core material is greater than that in the center.

### Example 5

The only difference between this embodiment and Example 1 is that in step (1), the molar ratio of ferric nitrate nonahydrate, manganese acetate, sodium nitrate, and ammonium dihydrogen phosphate is 1:4:15:15, while the rest is the same as Example 1, to prepare the Na₃Fe_{0.4}Mn_{1.6}(PO₄)P₂O₇ sodium ion battery cathode material coated with NaAlO₂ in this embodiment. At the center of the core material, the manganese content is higher than the iron content; On the surface of the core material, the iron content is higher than the manganese content. The manganese content in the center of the core material is greater than that in the surface layer, and the iron content in the surface layer of the core material is greater than that in the center.

### Example 6

The only difference between this embodiment and Example 1 is that in step (1), the molar ratio of ferric nitrate nonahydrate, manganese acetate, sodium nitrate, and ammonium dihydrogen phosphate is 4:1:15:15, while the rest is the same as Example 1, to prepare the Na₃Fe_{0.4}Mn_{1.6}(PO₄)P₂O₇ sodium ion battery cathode material coated with NaAlO₂ in this embodiment. At the center of the core material, the manganese content is higher than the iron content; On the surface of the core material, the iron content is higher than the manganese content. The manganese content in the center of the core material is greater than that in the surface layer, and the iron content in the surface layer of the core material is greater than that in the center.

### Example 7

The only difference between this embodiment and Example 1 is that in step (2), Na₂Si₂O₅ is used instead of NaAlO₂, while the rest is the same as Example 1, to obtain the Na₃FeMn(PO₄)P₂O₇ sodium ion battery cathode material coated with Na₂Si₂O₅ in this embodiment. The mass of the Na₂Si₂O₅ coating layer is 1% of the mass of the Na₃FeMn(PO₄)P₂O₇ core material, and the thickness of the coating layer is 2-3nm. At the center of the core material, the manganese content is higher than the iron content; On the surface of the core material, the iron content is higher than the manganese content. The manganese content in the center of the core material is greater than that in the surface layer, and the iron content in the surface layer of the core material is greater than that in the center.

### Example 8

The only difference between this embodiment and Example 1 is that in step (2), Na₃VO₄ is used to replace NaAlO₂, while the rest is the same as Example 1, to obtain the Na₃FeMn(PO₄)P₂O₇ sodium ion battery cathode material coated with Na₃VO₄ in this embodiment. The mass of the Na₃VO₄ coating layer is 1% of the mass of the Na₃FeMn(PO₄)P₂O₇ core material, and the thickness of the NaAlO₂ coating layer is 2-3nm. At the center of the core material, the manganese content is higher than the iron content; On the surface of the core material, the iron content is higher than the manganese content. The manganese content in the center of the core material is greater than that in the surface layer, and the iron content in the surface layer of the core material is greater than that in the center.

### Example 9

The only difference between this embodiment and Example 1 is that in step (1), the molar ratio of ferric nitrate nonahydrate, manganese acetate, sodium nitrate, and ammonium dihydrogen phosphate is 1.17:1.17:3.32:4; In step (3), the obtained dry powder was ground and further calcined at 600°C for 12h (heating rate of 2°C min⁻¹). The rest was the same as Example 1 to prepare the Na_{3.32}Fe_{1.17}Mn_{1.17}(P₂O₇)₂ sodium ion battery cathode material coated with NaAlO₂ in this example. At the center of the core material, the manganese content is higher than the iron content; On the surface of the core material, the iron content is higher than the manganese content. The manganese content in the center of the core material is greater than that in the surface layer, and the iron content in the surface layer of the core material is greater than that in the center.

### Example 10

The only difference between this embodiment and Example 1 is that in step (1), the molar ratio of ferric nitrate nonahydrate, manganese acetate, sodium nitrate, and ammonium dihydrogen phosphate is 0.5:0.5:1:1; In step (3), the obtained dry powder was ground and further calcined at 650°C for 12h (heating rate of 2°C min⁻¹). The rest was the same as Example 1 to prepare the NaFe_{0.5}Mn_{0.5}PO₄ sodium ion battery cathode material coated with NaAlO₂ in this example. At the center of the core material, the manganese content is higher than the iron content; On the surface of the core material, the iron content is higher than the manganese content. The manganese content in the center of the core material is greater than that in the surface layer, and the iron content in the surface layer of the core material is greater than that in the center.

### Example 11

The only difference between this embodiment and Example 1 is that the amount of sucrose added in step (1) is changed so that the mass of carbon in the final sodium ion cathode material is 0.1% of the mass of the Na₃FeMn(PO₄)P₂O₇ core material, while the rest is the same as Example 1, resulting in the Na₃FeMn(PO₄)P₂O₇ sodium ion battery cathode material coated with NaAlO₂ in this embodiment. At the center of the core material, the manganese content is higher than the iron content; On the surface of the core material, the iron content is higher than the manganese content. The manganese content in the center of the core material is greater than that in the surface layer, and the iron content in the surface layer of the core material is greater than that in the center.

### Example 12

The only difference between this embodiment and Example 1 is that the amount of sucrose added in step (1) is changed so that the mass of carbon in the final sodium ion cathode material is 4% of the mass of the Na₃FeMn(PO₄)P₂O₇ core material, while the rest is the same as Example 1, resulting in the Na₃FeMn(PO₄)P₂O₇ sodium ion battery cathode material coated with NaAlO₂ in this embodiment. At the center of the core material, the manganese content is higher than the iron content; On the surface of the core material, the iron content is higher than the manganese content. The manganese content in the center of the core material is greater than that in the surface layer, and the iron content in the surface layer of the core material is greater than that in the center.

### Example 13

The only difference between this embodiment and Example 1 is that in step (1), an equal amount of sodium polymethacrylate (with a number average molecular weight of about 9500) is used to replace polyvinyl alcohol, while the rest is the same as Example 1, to obtain the Na₃FeMn(PO₄)P₂O₇ sodium ion battery cathode material coated with NaAlO₂ in this embodiment. At the center of the core material, the manganese content is higher than the iron content; On the surface of the core material, the iron content is higher than the manganese content. The manganese content in the center of the core material is greater than that in the surface layer, and the iron content in the surface layer of the core material is greater than that in the center.

### Example 14

The only difference between this embodiment and Example 1 is that in step (1), the droplet rate of solution B is 0.1mL/s, and the droplet rate of solution C is 0.3mL/s. The rest is the same as Example 1, and Na₃FeMn(PO₄)P₂O₇ sodium ion battery cathode material coated with NaAlO₂ is prepared in this embodiment. At the center of the core material, the manganese content is higher than the iron content; On the surface of the core material, the iron content is higher than the manganese content. The manganese content in the center of the core material is greater than that in the surface layer, and the iron content in the surface layer of the core material is greater than that in the center.

### Example 15

The only difference between this embodiment and Example 1 is that in step (1), the droplet rate of solution B is 0.1mL/s, and the droplet rate of solution C is 0.5mL/s. The rest is the same as Example 1, and Na₃FeMn(PO₄)P₂O₇ sodium ion battery cathode material coated with NaAlO₂ is prepared in this embodiment. At the center of the core material, the manganese content is higher than the iron content; On the surface of the core material, the iron content is higher than the manganese content. The manganese content in the center of the core material is greater than that in the surface layer, and the iron content in the surface layer of the core material is greater than that in the center.

### Example 16

The only difference between this embodiment and Example 1 is that the amount of NaAlO₂ added in step (2) is changed so that the mass of the NaAlO₂ coating layer in the final sodium ion cathode material is 6% of the mass of the Na₃FeMn(PO₄)P₂O₇ core material, and the thickness of the NaAlO₂ coating layer is 8-10nm. The rest is the same as Example 1, resulting in the Na₃FeMn(PO₄)P₂O₇ sodium ion battery cathode material coated with NaAlO₂ in this embodiment. At the center of the core material, the manganese content is higher than the iron content; On the surface of the core material, the iron content is higher than the manganese content. The manganese content in the center of the core material is greater than that in the surface layer, and the iron content in the surface layer of the core material is greater than that in the center.

### Comparative Example 1

A method for preparing a cathode material of a sodium ion battery is as follows:
(1) Dissolve polyvinyl alcohol (number-average molecular weight 25,000 to 35,000) in 10mL of deionized water, heat to a constant temperature of 80°C and stir until completely dissolved, resulting in Solution A; dissolve ferric nitrate nonahydrate in 95% form in 10mL of deionized water, stir until dissolved to obtain Solution B (concentration 0.1 mol/mL), and dissolve manganese acetate in 10mL of deionized water, stir until dissolved to obtain Solution C. Pump Solution B and Solution C into Solution A using a peristaltic pump, controlling the droplet rate of Solution B at 0.1mL/s and Solution C at 0.2mL/s. After all solutions have been added, continuously stir the resulting mixture in an 80°C water bath. Then sequentially add sodium nitrate, ammonium dihydrogen phosphate, and sucrose. Evaporate the solution to a gel-like state, stop heating, and transfer it to a 120°C constant-temperature oven for drying for 12h. After removing from the oven, grind the powder into a fine powder, and calcine the resulting powder at 350°C for 6h. After cooling, further grind to obtain the precursor of mixed ferric phosphate manganese sodium.
   Among them, the molar ratio of ferric nitrate nonahydrate, manganese acetate, sodium nitrate and ammonium dihydrogen phosphate is 1: 1: 3: 3; the mass of polyvinyl alcohol is 3% of the sum of the mass of manganese source and iron source; the amount of sucrose added is calculated according to the mass ratio of carbon to core material in the final sodium ion cathode material.
(2) Grind the mixed iron manganese sodium pyrophosphate precursor obtained in step (1), and further calcine at 550°C for 12h. The calcination atmosphere is composed of 5% hydrogen and 95% argon, with a heating rate of 2°C min⁻¹, to obtain pure Na₃FeMn(PO₄)P₂O₇ sodium ion battery cathode material; The mass of carbon in the obtained sodium ion cathode material is 3% of the mass of Na₃FeMn(PO₄)P₂O₇. At the center of the core material, the manganese content is higher than the iron content; On the surface of the core material, the iron content is higher than the manganese content. The manganese content in the center of the core material is greater than that in the surface layer, and the iron content in the surface layer of the core material is greater than that in the center.

### Comparative Example 2

A method for preparing a cathode material of a sodium ion battery is as follows:
(1) Dissolve ferric nitrate nonahydrate in 10mL deionized water, stir until dissolved to obtain solution B (concentration of 0.1mol/L). Dissolve manganese acetate in 10mL deionized water, stir until dissolved to obtain solution C. Mix solutions B and C, and continuously stir the resulting mixture in an 80°C water bath. Then add ammonium dihydrogen phosphate, sodium nitrate, and sucrose sequentially. Evaporate the solution to a gel-like state, stop heating, transfer to a constant temperature oven at 120°C for drying for 12h. After removal, grind into powder, then calcine the obtained powder at 350°C for 6h. Cool further and grind to obtain the precursor of mixed ferric phosphate manganese sodium.
   Among them, the molar ratio of ferric nitrate nonahydrate, manganese acetate, sodium nitrate and ammonium dihydrogen phosphate is 1: 1: 3: 3, and the amount of sucrose added is calculated according to the mass ratio of carbon to core material in the final sodium ion cathode material.
(2) Firstly, disperse NaAlO₂ in deionized water and stir continuously at 25°C for 30 min to obtain a mixed solution D (concentration of 1mol/mL). Disperse the mixed iron manganese sodium pyrophosphate precursor prepared in step (1) in anhydrous ethanol to obtain a mixed solution E (concentration of 0.1mol/mL). Slowly add the mixed solution D to the mixed solution E through a peristaltic pump. After dropwise addition, stir and heat the new mixed solution in a water bath at 70°C, rapidly evaporate the solution, wait for the liquid to completely evaporate, and dry it in a constant temperature oven at 120°C for 5h to obtain a NaAlO₂ coated mixed iron manganese sodium pyrophosphate precursor. The amount of NaAlO₂ added is calculated based on the mass ratio of NaAlO₂ to the core material in the final sodium ion cathode material.
(3) After grinding the NaAlO₂ coated mixed iron manganese sodium pyrophosphate precursor obtained in step (2), it is further calcined at 550°C for 12h in a calcination atmosphere of 5% hydrogen and 95% argon, with a heating rate of 2°C min⁻¹, to obtain Na₃FeMn(PO₄)P₂O₇ sodium ion battery cathode material coated with NaAlO₂; In the obtained sodium ion positive electrode material, the mass of the NaAlO₂ coating layer is 1% of the mass of the Na₃FeMn(PO₄)P₂O₇ core material, the thickness of the NaAlO₂ coating layer is 2-3nm, and the mass of carbon is 3% of the mass of the Na₃FeMn(PO₄)P₂O₇ core material. At the center and surface of the core material, the manganese content is equal to the iron content. The manganese content in the center of the core material is equal to the manganese content in the surface layer, and the iron content in the surface layer of the core material is equal to the iron content in the center.

### Performance testing:

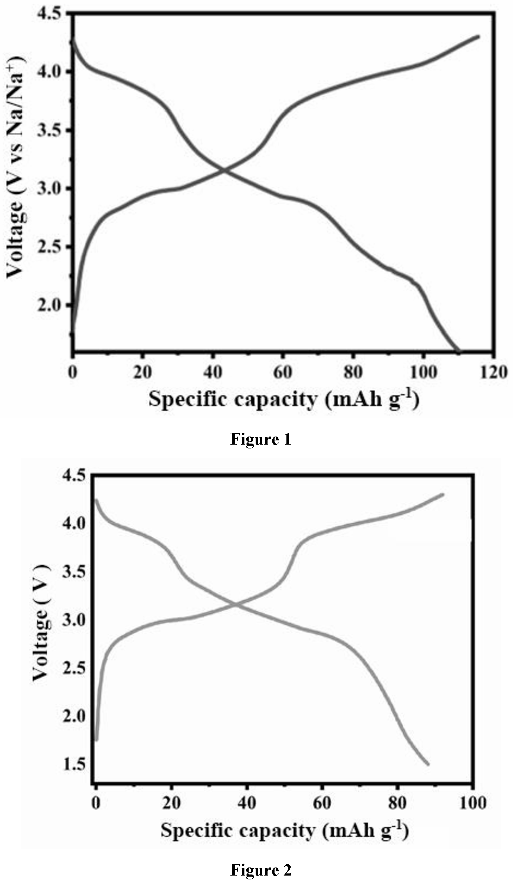

The sodium ion battery cathode material prepared from the examples and comparative examples was mixed with conductive carbon and PVDF solution (dissolved in methylpyrrolidone solution) to form a slurry. This slurry was then evenly coated on aluminum foil to produce the cathode. The cathode. was subsequently combined with Na sheets in a glove box to form a button cell. Electrochemical data were collected using a half-cell constructed with a 2016-type battery case. Charge-discharge tests were performed at a rate of 0.1C in a constant temperature chamber (25°C) using a blue charge-discharge test device (voltage range: 1.6-4.3V), yielding specific charge-discharge curves and 0.1C specific capacity data. After standard cycling at a rate of 0.5CC/0.5DC for 100 cycles, the corresponding cycle capacity retention rate (the percentage of the capacity at the 100th cycle relative to the first cycle) was recorded. Electrochemical impedance spectra (EIS) were obtained using an electrochemical workstation (CHI650D), with the test frequency set between 0.01-10⁵ Hz. See Table 1 and Figure 1, Figure 2 and Figure 3 for details.

**Table 1 Test results of battery performance of example and comparative example assembly**

| Group | 0.1C specific capacity (mAh/g) | Cycle retention rate (100th) | Voltage (V) | Resistance (Ω) |
|---|---|---|---|---|
| Example 1 | 111.5 | 98.5 | 3.6 | 70 |
| Example 2 | 108.2 | 98.0 | 3.6 | 71 |
| Example 3 | 109.8 | 98.1 | 3.6 | 74 |
| Example 4 | 100.4 | 98.4 | 3.6 | 80 |
| Example 5 | 103.2 | 97.3 | 3.9 | 100 |
| Example 6 | 112.7 | 99.0 | 3.3 | 65 |
| Example 7 | 109.4 | 98.4 | 3.6 | 74 |
| Example 8 | 110.3 | 98.1 | 3.6 | 68 |
| Example 9 | 109.2 | 98.4 | 3.6 | 72 |
| Example 10 | 108.7 | 98.4 | 3.6 | 71 |
| Example 11 | 109.2 | 98.1 | 3.6 | 79 |
| Example 12 | 110.0 | 98.6 | 3.6 | 67 |
| Example 13 | 110.8 | 98.8 | 3.6 | 69 |
| Example 14 | 110.3 | 98.2 | 3.6 | 73 |
| Example 15 | 107.2 | 96.9 | 3.6 | 89 |
| Example 16 | 98.3 | 98.2 | 3.6 | 102 |
| Comparative Example 1 | 88.3 | 90.2 | 3.6 | 84 |
| Comparative Example 2 | 61.2 | 94.7 | 3.6 | 107 |

Figure 1 shows the charge-discharge curves of the cathode material prepared in Example 1, Figure 2 shows the charge-discharge curves of the cathode material prepared in Comparative Example 1, Figure 3 shows the charge-discharge curves of the cathode material prepared in Comparative Example 2, Figure 4 shows the SEM image of the cathode material prepared in Example 1, and Figure 5 shows the EDS element distribution map of the cathode material prepared in Example 1.

Compared with Example 1 and Comparative Example 1, it can be seen that NaAlO₂ coating layer can enhance the battery capacity and maintain the material cycling stability. Comparing Example 1 with Comparative Example 2, it is evident that the unevenly distributed manganese iron cathode material of the present invention can improve the structural stability of the battery, thereby enhancing its electrochemical performance. Figures 4 and 5 show the particle morphology of the sodium ion battery cathode material prepared in Example 1. The EDS element distribution map in Figure 5 indicates the elemental distribution, showing that the iron element is more concentrated on the surface layer of the polyanionic iron-manganese based core material of the sodium ion battery cathode material compared to the manganese element, thus indicating that the iron content is higher than the manganese content on the surface layer of the polyanionic iron-manganese based core material of the sodium ion battery cathode material.

Finally, it should be noted that the above embodiments are intended to illustrate the technical solution of the present invention and not to limit the scope of protection of the present invention. Although detailed explanations have been provided with reference to preferred embodiments, those skilled in the art should understand that modifications or equivalent substitutions can be made to the technical solution of the present invention without departing from its essence and scope.

## Claims

1. A cathode material for a sodium ion battery, **characterized in that** the cathode material comprises a polyanion iron manganese based core material and a fast ion conductor layer covering the outer surface of the polyanion iron manganese based core material;
The polyanionic iron-manganese core material comprises iron and manganese, with the iron and manganese being non-uniformly distributed within the polyanionic iron-manganese core material; at the center of the polyanionic iron-manganese core material, the manganese content is higher than the iron content; on the surface layer of the polyanionic iron-manganese core material, the iron content is higher than the manganese content;
The polyanionic iron manganese based core material comprises at least one of NaFeₓMn₁₋ₓPO₄, Na₂FeₓMn₁₋ₓP₂O₇, Na₃Fe_{y}Mn_{2-y}(PO₄)P₂O₇ and Na₄₋ₐFe_{2+ (a/2) -z}Mn_{z}(P₂O₇)₂, where 0.2 ≤ x ≤ 0.8, 0.2 ≤ y ≤ 1.8, 2/3 ≤ a ≤ 7/8, and 0.2 ≤ z ≤ 1.8.

2. The cathode material for sodium ion battery according to claim 1, **characterized in that** 0.4≤ x≤ 0. 6.

3. The cathode material of the sodium ion battery according to claim 1 is **characterized in that** the fast ion conductor is NaₐM^{b+}_{c}O_{(a+bc)/2}, where a, b, c are positive integers, and M includes at least one of Zr, Al, V, Si.

4. The cathode material of the sodium ion battery according to claim 1 is **characterized in that** the mass of the fast ion conductor layer is 0.5%~6% of the mass of the polyanion iron manganese based core material.

5. The cathode material of the sodium ion battery according to claim 1 is **characterized in that** the mass of the fast ion conductor layer is 0.5%~5% of the mass of the polyanion iron manganese based core material.

6. The cathode material of the sodium ion battery according to claim 1, **characterized in that** a carbon layer is also contained between the polyanion iron manganese based core material and the fast ion conductor layer; the mass of the carbon layer is 0.1%~4% of the mass of the polyanion iron manganese based core material.

7. The cathode material of the sodium ion battery according to claim 1, **characterized in that** the manganese content at the center of the polyanionic iron-manganese core material is greater than the manganese content at the surface of the polyanionic iron-manganese core material, and the iron content at the surface of the polyanionic iron-manganese core material is greater than the iron content at the center of the polyanionic iron-manganese core material.

8. A method for preparing the cathode material of sodium ion battery according to any one of Claims 1 to 7, **characterized in that** it comprises the following steps:
(1) Dissolve the metal chelating agent in solvent to form solution A, dissolve the iron source in solvent to form solution B, and dissolve the manganese source in solvent to form solution C; Add solution B and solution C to solution A separately, with solution C added first and solution B added later; then add the phosphorus source, sodium source, and carbon source; Evaporate the resulting mixed solution to a gel state, dry it, grind it, calcine it, and grind again to obtain the precursor of polyanionic iron-manganese core material;
(2) Disperse the fast ion conductor in solvent to obtain solution D; disperse the precursor of polyanionic iron-manganese based core material obtained from step (1) in solvent to obtain solution E; add solution D dropwise to solution E, then evaporate and dry the resulting mixed solution to obtain the precursor of polyanionic iron-manganese based core material coated with fast ion conductor;
(3) The precursor of the polyanionic iron-manganese based core material coated with fast ion conductor obtained in step (2) is ground and calcined to obtain the cathode material of the sodium ion battery.

9. The method for preparing the cathode material of sodium ion battery according to claim 8 is **characterized in that**, in step (1), the molar ratio of iron in the iron source to manganese in the manganese source is Fe:Mn=(1-4):(1-4).

10. The method for preparing the cathode material of sodium ion batteries according to claim 8, **characterized in that** in step (1), the metal chelating agent is a high molecular compound composed of C, H, and O, capable of chelating with iron and manganese; the mass of the metal chelating agent is 1% to 5% of the combined mass of the iron source and manganese source.

11. The method for preparing the cathode material of sodium ion battery according to claim 8 is **characterized in that**, in step (1), the droplet rate ratio of solution B and solution C is 1:(2-5).

12. The method for preparing the cathode material of the sodium ion battery according to claim 8 is **characterized in that** it satisfies at least one of the following:
(1) In step (1), the droplet rate ratio of solution B to solution C is 1:(2-3);
(2) In the step (1), the calcination temperature is 300°C~400°C, and the time is 5h~8h;
(3) In the step (3), the calcination temperature is 500°C~650°C, and the time is 9h~12h;
(4) In step (3), the atmosphere for calcination is a mixture of hydrogen and argon;
(5) The sodium source comprises at least one of sodium carbonate, sodium bicarbonate, sodium acetate and sodium nitrate;
(6) The iron source comprises at least one of ferrous oxalate dihydrate, ferrous phosphate and ferric nitrate Nonahydrate;
(7) The manganese source comprises at least one of manganese chloride, manganese acetate and manganese nitrate;
(8) The phosphorus source comprises at least one of ammonium dihydrogen phosphate, diammonium hydrogen phosphate and ammonium phosphate;
(9) The carbon source comprises at least one of glucose, sucrose and citric acid;
(10) The metal chelating agent comprises at least one of polyvinyl alcohol and polymethacrylic acid.

13. The method for preparing the cathode material of the sodium ion battery according to claim 8 is **characterized in that** in step (3), the calcination temperature is 500°C~600°C.

14. A cathode slurry or cathode of a sodium ion battery, **characterized in that** the cathode slurry or cathode of the sodium ion battery comprises the cathode material of a sodium ion battery as claimed in any one of claims 1-7 or the cathode material of a sodium ion battery prepared by any one of claims 8-13.

15. A sodium ion battery, **characterized in that** it comprises a cathode, the cathode comprising the cathode material of the sodium ion battery as claimed in any one of claims 1 to 7 or the cathode material of the sodium ion battery prepared by any one of claims 8 to 13.
